# EUROPÄISCHE PATENTANMELDUNG

(11) **EP 1 361 550 A1**
(43) Veröffentlichungstag der Anmeldung: **12.11.2003**
(21) Anmeldenummer: 02010099.6
(22) Anmeldetag: 07.05.2002
(51) Int. Cl.: G07F 19/00

(54) **Verfahren zur Vergebührung von Internet-Diensten**

(71) Anmelder: SIEMENS AKTIENGESELLSCHAFT, 80333 München (DE)
(72) Erfinder: Guan, Qi, Dr., 1210 Wien (AT); Lenger, Markus, 1220 Wien (AT)
(74) Vertreter: Berg, Peter, Dipl.-Ing.

(57) **Zusammenfassung**

Die Erfindung betrifft ein Verfahren zur Vergebührung von Internet-Diensten, bei dem Internet-Benutzer über Server eines Internet-Providers Zugang zum Internet haben und von verschiedenen Anbietern gebührenpflichtige Leistungen beziehen, und wobei der Internet-Provider (ISB) die Internet-Benutzer (USER) auf vorab festgelegte Anbieter (ICP) hinweist, und wobei bei der Bestellung einer Leistung eines vorab festgelegten Anbieters (ICP) durch einen Internet-Benutzer (USER) vom Rechner des Benutzers (USER) eine Auftragskennung (A) vergeben wird und diese Auftragskennung an den Anbieter (ICP) und den Internet-Provider (ISB)versendet wird.

Damit wird der anonyme Bezug von Leistungen und eine gesicherte Verrechnungsmethode ermöglicht.

## Beschreibung

Die Erfindung betrifft ein Verfahren zur Vergebührung von Internet-Diensten, bei dem Internet-Benutzer über Server eines Internet-Providers von verschiedenen Anbietern gebührenpflichtige Leistungen beziehen.

Der Bezug gebührenpflichtiger Leistungen aus dem Internet und der damit verbundene Zahlungsvorgang stellen für den Benutzer ein gewisses Risiko dar. Zum einen besteht bei einem üblichen Bezahlungsvorgang mittels Verrechnung über Kreditkartenunternehmen die Gefahr des Mißbrauchs, zum anderen bergen auch die übliche Weitergabe von Telefonnummer und/oder Benutzernamen und Anschrift das Risiko mit sich, daß diese Daten weitergegeben werden und der Benutzer beispielsweise mit Werbesendungen belästigt wird.

Zur Absicherung des Bezahlungsvorganges wurden daher Systeme zur sicheren Übertragung von Kreditkartendaten entwickelt, bei denen eine spezielle Verschlüsselungssoftware sowohl beim Benutzer als auch beim Anbieter installiert wird und die Daten verschlüsselt übertragen werden. Durch eine zentrale Prüfstelle, bei der beide Beteiligten registriert sein müssen, wird der Zahlungsvorgang legitimiert.

Als nachteilig kann dabei die Bindung an Kreditkarte und zentrale Registrierung empfunden werden.

Der Erfindung liegt daher die Aufgabe zugrunde, ein Verfahren anzugeben, bei dem weitgehende Anonymität des Benutzers und freie Wahlmöglichkeit in Bezug auf den Bezahlungsvorgang gewährleistet sind.

Dies geschieht erfindungsgemäß mit einem Verfahren der eingangs genannten Art, bei dem der Internet-Provider die Internet-Benutzer auf vorab festgelegte Anbieter hinweist, und bei dem bei der Bestellung einer Leistung eines vorab festgelegten Anbieters durch einen Internet-Benutzer vom Rechner des Benutzers eine Auftragskennung vergeben wird und diese anonyme Auftragskennung an den Anbieter und den Internet-Provider versendet wird.

Nach dem erfindungsgemäßen Verfahren werden keine sensiblen Daten des Benutzers gesendet. Die Identität des Benutzers ist nur dem Internet-Provider bekannt, sie wird auch dem Anbieter gegenüber nicht offenkundig. Die Verrechnung der Leistungen erfolgt ausschließlich über den Internet-Provider, zu dem für den Benutzer eine überschaubare und vertrauenswürdige vertragliche Beziehung besteht.

Vorteilhaft ist es, wenn zusätzlich zur Auftragskennung auch eine vom Internet-Provider erstellte anonyme Benutzerkennung und eine Dienstkennung an den Anbieter und den Internet-Provider versendet werden. Damit wird die Abrechnung der Leistungen vereinfacht.

Vorteilhaft ist es, wenn bei Abhängigkeit der Höhe der Vergebührung von der Dauer des Bezuges der Leistungen die anonyme Auftragskennung während der Dauer des Bezuges in vorgegebenen Zeitabständen periodisch wiederkehrend neu vergeben und an den Anbieter und den Internet-Provider versendet wird. Dabei ist es besonders vorteilhaft, wenn bei der Bestellung einer Leistung der Benutzer auf die dadurch anfallenden Gebühren hingewiesen wird. Dies kann beispielsweise dadurch geschehen, dass in einem Fenster der Bildschirmdarstellung ein "Gebührenzähler" aufgezeigt wird. Es ist dabei auch denkbar, die Gebühren zu verschiedenen, in einem bestimmten Zeitraum bezogenen Leistungen, d.h. einen "Kontostand" darzustellen.

Damit ist bei auch bei der Vergebührung von Leistungen in Abhängigkeit von der Dauer des Bezuges die Kostenkontrolle durch den Benutzer gegeben. Insbesondere wird bei einem Netz- oder Serverausfall die Vergebührung gestoppt. Die Möglichkeit der Kostenkontrolle ist bei dieser Art von Leistung von besonderer Bedeutung, ist aber auch bei Bezug von Leistungen mit Abonnement- oder Dienstverrechnung von Vorteil.

Vorteilhaft ist es weiterhin, wenn der Hinweis auf vorab festgelegte Anbieter auf einem Portal des Internet-Providers erfolgt. Als Portale bezeichnet man allgemeine Einstiegspunkte des Internet, auf denen dem Benutzer Standardangebote präsentiert werden.

Günstig ist es weiterhin, wenn vor der Leistungserbringung der Anbieter beim Internet-Provider anfragt, ob der Benutzer zum Bezug dieser Leistung berechtigt ist. Damit ist es beispielsweise für den Benutzer möglich, bestimmte Leistungen sperren zu lassen, d.h. Benutzer mit Kindern können den Bezug von speziellen Angeboten für Erwachsene für sich ausschließen.

Die Erfindung wird anhand von zwei Figuren näher erläutert, welche beispielhaft den Ablauf zu zwei unterschiedlichen Bezugs- und Verrechnungsmodellen darstellen.

Es zeigen
Fig.1 den Ablauf einer abonnement- oder dienstgesteuerten Verrechnung und
Fig.2 den Ablauf einer zeitgesteuerten Verrechnung von Internetleistungen.

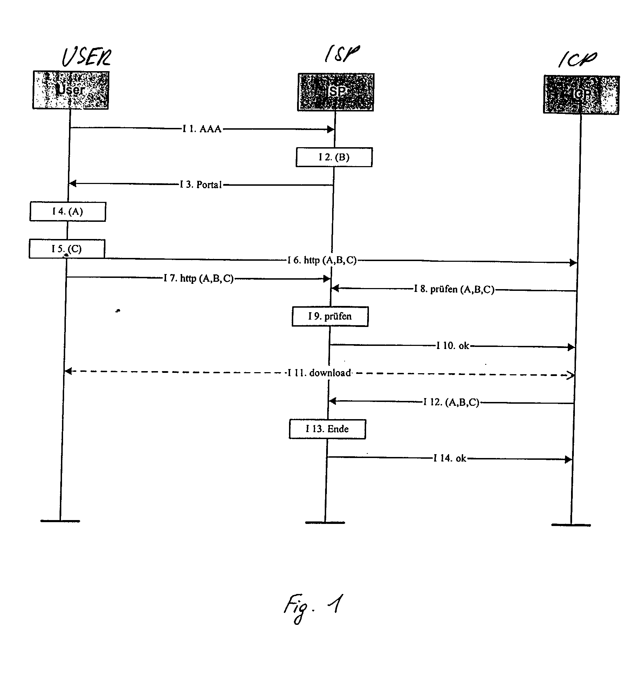

Der Ablauf nach Fig. 1 betrifft die Anforderung einer Leistung, die als Abonnement verrechnet wird. Das bedeutet, dass mit der Bezahlung z.B. der Zugriff auf eine Internet-Zeitung, oder eine Datenbank für einen bestimmten Zeitraum erworben wird. Analog dazu ist auch der Ablauf beim Bezug einer dienstgesteuerten Leistung wie sie z.B. für den Download von Bildern, Musikstücken oder Software Verwendung findet.

In einem ersten Schritt I 1.AAA wird die Verbindung zwischen Benutzer USER und Internet Service Provider ISP aufgebaut. Dazu kann beispielsweise das "Point to Point Protokoll" (PPP) für den Modemzugang verwendet und die Authentifizierung des Benutzers auf diese Weise angestoßen werden.

Bei bereits bestehender Internet Verbindung (z.B. über einen Fremd-Provider) erfolgt die Registrierung beim Internet-Provider mittels Hyper Text Transfer Protokoll (http).

Dies ist außerdem der Fall wenn der Benutzer USER den Anbieter ICP direkt über das Internet erreicht und einen Dienst nutzen will. Dann besteht die Möglichkeit eines "Rerouting" über den Internet-Provider ISP für die Authentifizierung, die notwendig ist, um den erfindungsgemäßen anonymen Bezug und die Vergebührung des Dienstes über den Internet-Provider ISP zu steuern.

Voraussetzung dafür ist allerdings, dass der Anbieter ICP eine Vertragsbeziehung zu dem Internet-Provider ISP hat, d.h. zu den vorab festgelegten Anbietern gehört.
Im nächsten Schritt I 2 wird vom Internet-Provider ISP für den Benutzer USER eine anonyme Benutzerkennung B generiert und vertraulich verwaltet.

Darauf wird in Schritt 13.Portal das Angebots-Portal, z.B. die Homepage gemeinsam mit der anonymen Benutzerkennung B zum Benutzer USER transferiert. Mittels Internet Browser wird dem Benutzer das ISP Portal mit Links, d.h. Querverweisen auf unterschiedliche Leistungen von einem oder mehreren Anbietern ICP dargeboten.

Der Rechner des Benutzers generiert in Schritt I4. (A) eine anonyme Auftragskennung A. Diese dient später zur Identifikation der Vergebührung.

Wenn sich der Benutzer nun für eine bestimmte Leistung eines Anbieters entscheidet und diese durch Anwahl der entsprechenden Darstellung am Bildschirm seines Rechners abruft ( Schritt I 5. (C)) wird in Schritt I 6. http(A,B,C) vom Rechner des Benutzers ein sogenannter http GET Request gemäß Hyper Text Transfer Protokoll für eine bestimmte Leistung an den Anbieter ICP gesandt.

Der Auftrag (Request) enthält eine Auftragskennung A, die anonyme Benutzerkennung B und eine Dienstkennung C.

Zur Transaktionskontrolle der Vergebührung und als Bestätigung der Leistungsanforderung wird die vom Rechner des Benutzers generierte anonyme Auftragskennung A , die Dienstkennung C und die anonyme Benutzerkennung mittels Hyper Text Transfer Protokoll auch an den Internet-Provider ISP gesendet (Schritt I 7.http(A,B,C)).

Der Anbieter ICP sendet daraufhin (Schritt I 8.prüfen (A,B,C))eine Anfrage an den Internet-Provider ISP, ob der anonyme Benutzer USER berechtigt ist, die Leistung zu beziehen. Zur Autorisierungsbestätigung und Transaktionskontrolle wird die anonyme Auftragskennung A mitgesendet.

Der Internet-Provider ISP überprüft in Schritt I 9., ob der Benutzer USER tatsächlich die Berechtigung für den Bezug der Leistung hat und erteilt gegebenenfalls seine Zustimmung (Schritt I 10.ok).

Im nächsten Verfahrensschritt I 11.download werden die gewünschten Daten der Leistung vom Anbieter ICP an den Benutzer USER gesandt. Sobald der Anbieter ICP die erste Bestätigung erhält, dass die Daten am Zielrechner eingetroffen sind (z.B. über das TCP Protokoll), hat er die Möglichkeit die anonyme Auftragskennung A beim ISP anzugeben ("einzulösen"), um die Vergebührung anzustoßen (Schritt I 12.(A,B,C)).

Der Internet-Provider ISP vergleicht nun die Auftragskennung A und die Dienstkennungen C, die er vom Benutzer USER und vom Anbieter ICP erhalten hat (Schritt I 13. Ende) und sendet eine abschließende Vergebührungsbestätigung an den Anbieter ICP (Schritt I 14.ok). Diese Bestätigung dient dem Anbieter ICP als Protokoll für die Verrechnung.

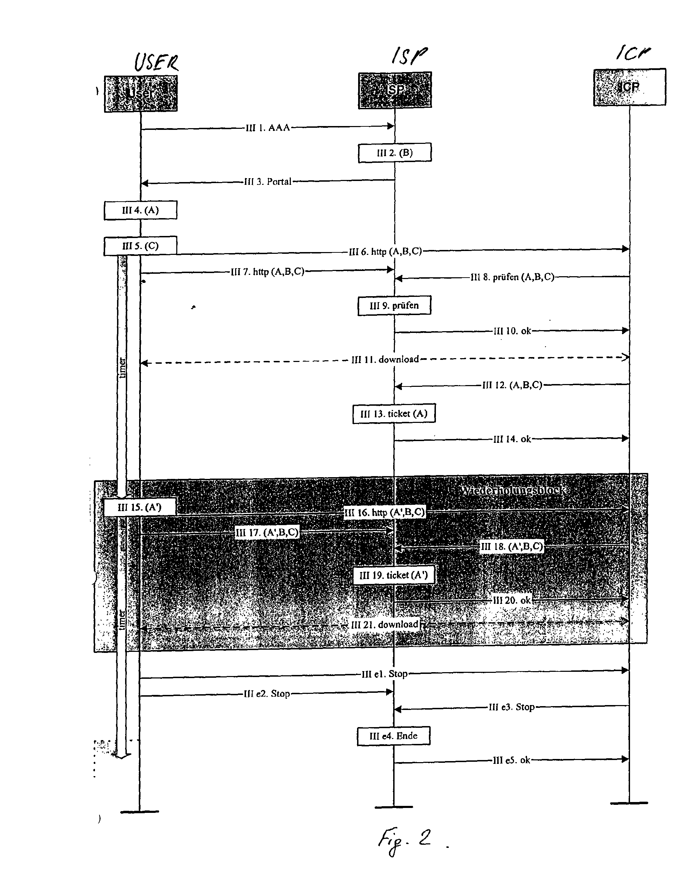

Fig.2 zeigt den beispielhaften Ablauf einer zeitgesteuerten Verrechnung. Die Verfahrensschritte III 1 bis III 14 stimmen dabei mit den Verfahrensschritten I 1 bis I 14 der abonnementgesteuerten Verrechnung überein. In Ergänzung zu dem Verfahren bei der abonnement- oder dienst-gesteuerten Verrechnung werden jedoch hier in periodisch wiederkehrenden Abständen die Verfahrensschritte zum Abruf der Leistung, dem Auftrag (Request) und dem Download (Schritte III 15 bis III 21 entsprechend III 5 bis III 13 bzw. I 5 bis I 11) solange wiederholt, bis der Download vom Benutzer beendet wird (Schritt IIIe1.Stop und IIIe2.Stop ), oder die Übertragung komplett ist und der Hinweis auf das Ende des Downloads durch den Anbieter erfolgt (Schritt IIIe3.Stop).

Danach wird vom Internet-Provider die Vergebührung abgeschlossen und der Vorgang beeendet (Schritte III e4. Ende und III e5.ok)

Während des gesamten Ablaufes wird dem Benutzer in einem Fenster der Bildschirmdarstellung ein "Gebührenzähler" aufgezeigt. Dieser zeigt die zu dem laufenden Bezug bisher angefallenen Gebühren sowie auf Wunsch des benutzer auch einen Kontostand, d.h. die in einem vorgegeben Zeitraum wie beispielsweise einer Woche oder einem Monat, oder seit der letzten Abrechnung bezogenen Leistungen und damit angefallenen Gebühren.

## Patentansprüche

1. Verfahren zur Vergebührung von Internet-Diensten, bei dem Internet-Benutzer über Server eines Internet-Providers von verschiedenen Anbietern gebührenpflichtige Leistungen beziehen, **dadurch gekennzeichnet, daß** der Internet-Provider (ISB) die Internet-Benutzer (USER) auf vorab festgelegte Anbieter (ICP) hinweist, und daß bei der Bestellung einer Leistung eines vorab festgelegten Anbieters (ICP) durch einen Internet-Benutzer (USER) vom Rechner des Benutzers (USER) eine Auftragskennung (A) vergeben wird und diese Auftragskennung an den Anbieter (ICP) und den Internet-Provider (ISB)versendet wird.

2. Verfahren nach Anspruch 1 **dadurch gekennzeichnet, daß** zusätzlich zur Auftragskennung auch eine vom Internet-Provider erstellte anonyme Benutzerkennung (B) und eine Dienstkennung (C) an den Anbieter (ICP) und den Internet-Provider (ISB)versendet werden.

3. Verfahren nach Anspruch 1 oder 2, **dadurch gekennzeichnet, daß** bei Abhängigkeit der Höhe der Vergebührung von der Dauer des Bezuges der Leistungen die anonyme Auftragskennung während der Dauer des Bezuges in vorgegebenen Zeitabständen periodisch wiederkehrend wiederkehrend neu vergeben und an den Anbieter (ICP) und den Internet-Provider (ISB) versendet wird.

4. Verfahren nach einem der Ansprüche 1 bis 3, **dadurch gekennzeichnet, daß** der Hinweis auf vorab festgelegte Anbieter (ICP) auf einem Portal des Internet-Providers (ISB) erfolgt.

5. Verfahren nach einem der Ansprüche 1 bis 4, **dadurch gekennzeichnet, daß** bei der Bestellung einer Leistung der Benutzer auf die dadurch anfallenden Gebühren hingewiesen wird.

6. Verfahren nach einem der Ansprüche 1 bis 5, **dadurch gekennzeichnet, daß** vor der Leistungserbringung der Anbieter (ICP) beim Internet-Provider (ISP) anfragt, ob der Benutzer (USER) zum Bezug dieser Leistung berechtigt ist.
